# EUROPÄISCHE PATENTSCHRIFT

(11) **EP 2 809 567 B1**
(45) Veröffentlichungstag und Bekanntmachung des Hinweises auf die Patenterteilung: **20.12.2017**
(21) Anmeldenummer: 13702984.9
(22) Anmeldetag: 31.01.2013
(51) Int. Cl.: B62D 3/12, F16H 55/28

(54) **VORRICHTUNG ZUM ANDRÜCKEN EINES ÜBERTRAGUNGSELEMENTS**
DEVICE FOR PRESSING A TRANSMISSION ELEMENT
DISPOSITIF POUR PRESSER UN ÉLÉMENT DE TRANSFERT

(30) Priorität: 02.02.2012 DE 102012100851
(43) Veröffentlichungstag der Anmeldung: 10.12.2014
(73) Patentinhaber: Robert Bosch Automotive Steering GmbH, 73527 Schwäbisch Gmünd (DE)
(72) Erfinder: SPEIDEL, Gerd, 73650 Winterbach (DE); SCHÄNZEL, Rainer, 73457 Essingen (DE); ALBER, Thomas, 70794 Filderstadt (DE)
(86) Internationale Anmeldenummer: PCT/EP2013/051863
(87) Internationale Veröffentlichungsnummer: WO 2013/113795

(56) Entgegenhaltungen:
- EP-A2- 1 086 880
- WO-A2-02/088572
- DE-A1- 10 354 776
- US-A- 6 119 540
- US-A- 6 142 031

## Beschreibung

Die Erfindung betrifft eine Vorrichtung zum Andrücken eines ersten Übertragungselements an ein in das erste Übertragungselement eingreifendes zweites Übertragungselement, insbesondere für eine Zahnstangenlenkung eines Kraftfahrzeugs, mit einem in Richtung des ersten Übertragungselements durch mindestens ein Federelement belastbaren, in einem Gehäuse verschiebbar geführten Druckstück.

Bei den aus dem Stand der Technik bekannten gattungsgemäßen Vorrichtungen wird für das Federelement eine Spiralfeder verwendet. Ihre Aufgabe ist es, während des Fahrbetriebs eine Zahnstange gegen ein Ritzel zu drücken, so dass unerwünschte Geräusche vermieden werden können. Die Geräusche können entweder in einem Kontaktbereich zwischen dem Druckstück und einer Stellschraube bei schnellem Hin- und Herdrehen eines Lenkrads oder bei einer Fahrt über eine holprige Strecke als auch zwischen dem Druckstück und der Zahnstange oder zwischen der Zahnstange und dem Ritzel entstehen. Die Geräusche, die also beim Betätigen der Lenkung entstehen, können auch im Stillstand des Kraftfahrzeugs oder bei langsamer Fahrt auftreten. Der Versuch, dieses Problem durch ein Federelement mit einer erhöhten Federkraft zu lösen, bringt jedoch kein zufriedenstellendes Ergebnis, da die erhöhte Federkraft gleichzeitig eine erhöhte Verschiebekraft zum Bewegen der Zahnstange erfordert. Die erhöhte Verschiebekraft reduziert folglich bei schneller Fahrt den Lenkkomfort, insbesondere ist beim Anlenken der Lenkung ein zu hoher Widerstand zu überwinden.

DE 103 54 776, US 6 119 540 und US 6 142 031 offenbaren elastomerischen Federelemente.

Die Erfindung hat die Aufgabe, unerwünschte Geräusche bei der eingangs genannten Vorrichtung deutlich zu reduzieren, ohne den Lenkkomfort zu verschlechtern. Diese Aufgabe wird durch eine gattungsgemäße Vorrichtung gelöst, bei der erfindungsgemäß das mindestens eine Federelement aus mindestens einem dilatanten Elastomer gefertigt ist. Für das Elastomer kann bevorzugt ein Polyborsiloxan eingesetzt werden. Das erste Übertragungselement kann eine Zahnstange und das zweite Übertragungselement ein in die Zahnstange eingreifendes Ritzel sein. Das dilatante Elastomer besitzt einen Elastizitätsmodul, der sich aus einem Verlustmodul und einem Speichermodul zusammensetzt. Der Verlustmodul gibt dem Federelement eine weiche Kennlinie, die bei einer niedrigen Lenkwechselfrequenz zum Tragen kommt, und der Speichermodul eine härtere Kennlinie, die bei einer hohen Lenkwechselfrequenz oder bei einer Fahrt über eine holprige Strecke zum Tragen kommt. Somit kann das aus dem dilatanten Elastomer gefertigte Federelement ein Druckstück sowohl bei einer niedrigen Lenkwechselfrequenz als auch bei einer hohen Lenkwechselfrequenz und bei Fahrten über holprige Strecken zuverlässig gegen die Zahnstange und die Zahnstange gegen das Ritzel drücken. Dadurch werden unerwünschte Geräusche zuverlässig unterbunden.

Besonders wirksam ist der Anpressdruck des mindestens einen Federelements, wenn das mindestens eine dilatante Elastomer die Form eines Kegels, eines Kegelstumpfes, einer Scheibe, eines Rings oder eines O-Rings aufweist.

Das mindestens eine Federelement kann in einem Hohlraum im Druckstück angeordnet sein. Der Hohlraum lässt sich fertigungstechnisch einfach und kostengünstig herstellen. Er bestimmt somit eine genau definierte Position des Federelementes, so dass es seine Funktion zuverlässig erfüllen kann.

Der Hohlraum kann mit einem Deckel verschlossen werden, insbesondere gasdicht verschlossen werden. Auf diese Weise wird sichergestellt, dass das mindestens eine Elastomer seine Feuchtigkeit bewahren und nicht austrocknen kann, wodurch auch über lange Betriebszeiten eine einwandfreie Funktion sichergestellt ist.

Alternativ kann in dem Hohlraum eine Nachstelleinrichtung angeordnet werden. Sie gleicht ein in der Lenkung im Laufe des Betriebes auftretendes, vorzugsweise verschleißbedingtes Spiel aus.

Um eine optimale Anpressung der Zahnstange gegen das Ritzel zu gewährleisten, kann der Deckel gegen das mindestens eine Federelement drücken. Aus demselben Grund kann eine Stellschraube gegen den Deckel drücken, sodass die Stellschraube einen Anpressdruck auf das Federelement ausüben kann.

Um die Anpressung der Zahnstange gegen das Ritzel genau einstellen zu können, kann in der Stellschraube ein Schraubbolzen zur Feineinstellung einer Vorspannung des Federelementes vorgesehen sein.

Das mindestens eine Elastomer kann in einem Tauchverfahren mit einer Umhüllung versehen werden. Die Umhüllung kann vorzugsweise aus Latex hergestellt werden. Die Umhüllung bildet für das Elastomer eine Schutzschicht, um es beispielsweise gegenüber aggressiven Medien und vor Austrocknung zu schützen.

Die Kennlinie des Verlustmoduls und die Kennlinie des Speichermoduls des mindestens einen dilatanten Elastomers, aufgetragen über einer Frequenz, können sich in einem Frequenzbereich von 2 Hz bis 15 Hz schneiden. Dieser Frequenzbereich hat sich in der Praxis als besonders wirksam erwiesen, um eine optimale Anpressung bei niedrigen und bei hohen Lenkwechselfrequenzen zu erzielen.

In einer bevorzugten Ausführungsform kann das als O-Ring ausgebildete mindestens eine Elastomer in mindestens einer um das Druckstück umlaufenden Nut angeordnet sein. Auf diese Weise werden die unerwünschten Geräusche noch wirksamer verhindert.

Zur Einstellung des optimalen Schnittpunktes zwischen der Kennlinie des Verlustmoduls und der Kennlinie des Speichermoduls kann das mindestens eine dilatante Elastomer mit einem Füllstoff versehen sein. Zu diesem Zweck eignet sich pyrogene Kieselsäure besonders gut.

Nachfolgend wird ein bevorzugtes Ausführungsbeispiel der erfindungsgemäßen Vorrichtung anhand der beiliegenden Zeichnungen mehr erläutert.

Im Einzelnen zeigen:
- Fig. 1: eine Draufsicht auf eine Lenkung eines Kraftfahrzeugs;
- Fig. 2: eine Schnittansicht durch eine erste Ausführungsform der Vorrichtung;

- Fig. 3: eine schematische Schnittansicht durch eine zweite Ausführungsform der Vorrichtung;
- Fig. 4: eine schematische Schnittansicht durch eine dritte Ausführungsform der Vorrichtung;
- Fig. 5: eine schematische Schnittansicht durch eine vierte Ausführungsform der Vorrichtung;
- Fig. 6: eine schematische Schnittansicht durch eine fünfte Ausführungsform der Vorrichtung;
- Fig. 7: eine schematische Schnittansicht durch eine sechste Ausführungsform der Vorrichtung;
- Fig. 8: eine schematische Schnittansicht durch eine siebte Ausführungsform der Vorrichtung;
- Fig. 9: eine perspektivische Draufsicht auf eine Scheibe;
- Fig. 10: eine Kennlinie eines Verlustmoduls und eines Speichermoduls eines dilatanten Elastomers, aufgetragen über einer Frequenz.

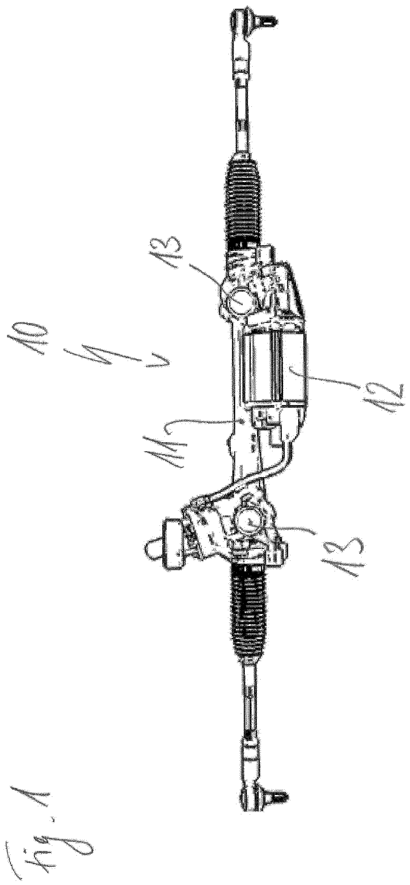

Fig. 1 zeigt eine Lenkung 10, insbesondere eine Elektrolenkung für ein Kraftfahrzeug, mit einem Gehäusebereich 11, hinter dem sich eine Zahnstange verbirgt, einem Gehäusebereich 12, hinter dem ein Elektromotor montiert ist, und Vorrichtungen 13 zum Andrücken der Zahnstange gegen zwei hier nicht näher dargestellte Ritzel. Die Zahnstange entspricht einem ersten Übertragungselement und das Ritzel einem zweiten Übertragungselement.

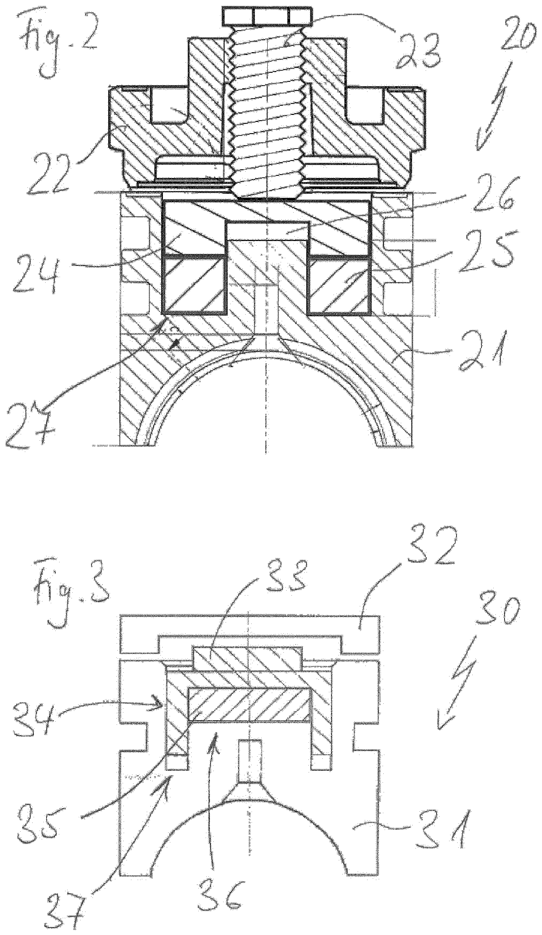

Fig. 2 zeigt eine Vorrichtung 20 zum Andrücken der Zahnstange an das Ritzel. Die Vorrichtung 20 weist ein Druckstück 21 auf, gegen das eine Stellschraube 22 drückt. Die Stellschraube 22 weist ein hier nicht näher dargestelltes Außengewinde auf, mit dem sie in ein ebenfalls nicht gezeigtes Gehäuse eingeschraubt werden kann, in dem das Druckstück 21 geführt ist.

In der Stellschraube 22 ist ein Schraubbolzen 23 eingeschraubt, der gegen einen Deckel 24 drückt. Der Deckel 24 drückt gegen ein Federelement 25, das aus einem dilatanten Elastomer in Form eines Rings mit einem rechteckigen Querschnitt gefertigt ist. Somit dient der Schraubbolzen 23 zur Feineinstellung einer Vorspannung des Federelements 25.

Der Deckel 24 ist topfförmig ausgebildet. Deshalb weist das Druckstück 21 einen Hohlraum 26 mit einer umlaufenden Nut 27 zur Aufnahme des Deckels 24 und des Federelements 25 auf.

Fig. 3 zeigt eine Vorrichtung 30 mit einem Druckstück 31 und einer schematisch dargestellten Stellschraube 32, in die ebenfalls ein Schraubbolzen eingeschraubt werden kann, der aber aus Gründen der besseren Darstellbarkeit hier nicht gezeigt ist.

Die Stellschraube 32 drückt auf einen einen Absatz 33 aufweisenden Deckel 34, der auf ein scheibenförmig ausgebildetes, aus dem dilatanten Elastomer hergestelltes, Federelement 35 drückt. Der Deckel 34 ist ebenfalls topfförmig ausgebildet. Das Druckstück 31 weist einen Hohlraum 36 mit einer umlaufenden Nut 37 zur Aufnahme des Deckels 34 und des Federelements 35 auf.

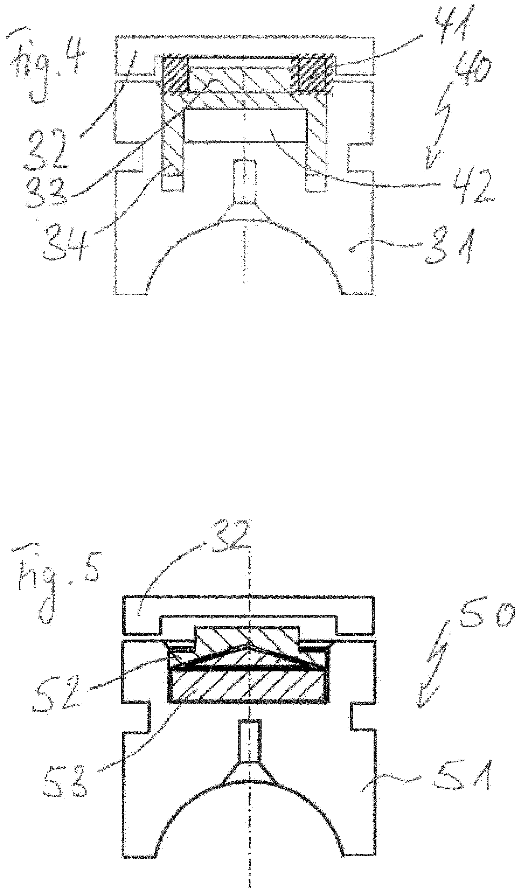

Bei einer Vorrichtung 40 mit dem Druckstück 31 und dem Deckel 34 ist zwischen der Stellschraube 32 und dem Deckel 34 ein ringförmig ausgebildetes Federelement 41 angeordnet (siehe Fig. 4). Das Federelement 41 ist ebenfalls aus dem dilatanten Elastomer gefertigt. Es wird über den Absatz 33 gestülpt und ist somit zentriert. Außerdem ist zwischen dem Deckel 34 und dem Druckstück 31 ein Bauelement 42 angeordnet, das entweder eine Distanzscheibe oder ein weiteres aus dem dilatanten Elastomer gefertigtes Federelement sein kann.

Bei einer Vorrichtung 50 mit einem Druckstück 51 und einem Deckel 52 drückt die Stellschraube 32 gegen den Deckel 52, der gegen ein kegelförmiges, aus dem dilatanten Elastomer gefertigtes, Federelement 53 drückt. Der Deckel 52 ist an die kegelförmige Kontur des Federelements 53 angepasst, so dass der Druck von der Stellschraube 32 oder dem hier ebenfalls nicht gezeigten Schraubbolzen optimal auf das Federelement 53 übertragen wird.

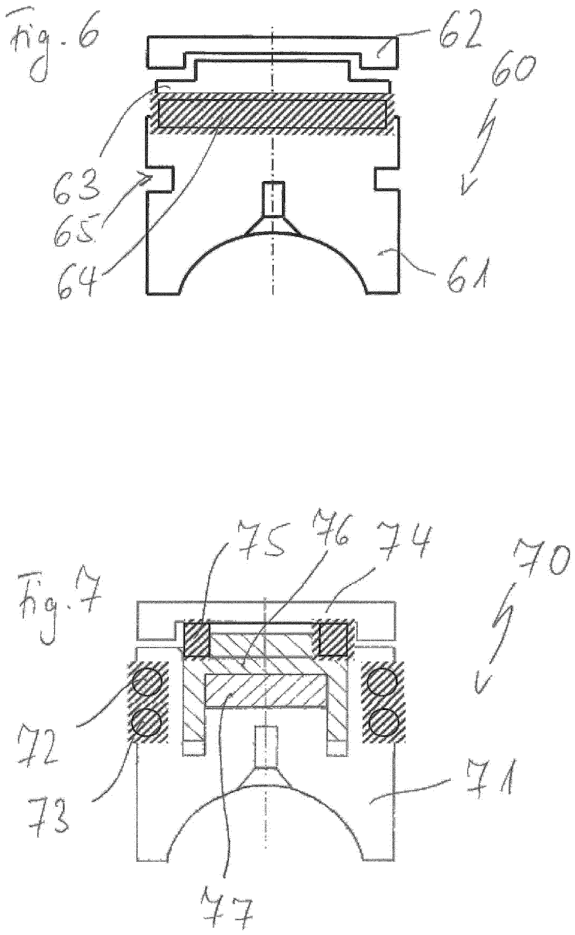

Fig. 6 zeigt eine Vorrichtung 60 mit einem Druckstück 61 und einer Stellschraube 62. Unterhalb der Stellschraube 62 ist ein Deckel 63 angeordnet, der gegen ein scheibenförmig ausgebildetes Federelement 64 drückt. Das Druckstück 61 weist außerdem eine umlaufende Nut 65 auf, in dem ein O-Ring, der vorzugsweise ebenfalls aus dem dilatanten Elastomer gefertigt ist, angeordnet werden kann.

Fig. 7 zeigt eine Vorrichtung 70, mit einem Druckstück 71, in dem in zwei umlaufenden Nuten zwei O-Ringe 72 und 73 angeordnet sind. Unterhalb einer Stellschraube 74 ist ein ringförmiges erstes Federelement 75 angeordnet und unterhalb eines Deckels 76 ein zweites scheibenförmiges Federelement 77. Somit drückt die Stellschraube 74 gegen das Federelement 75 und das Federelement 75 gegen den Deckel 46, der gegen das Federelement 77 drückt. Die O-Ringe 72 und 73 und die Federelemente 75 und 77 sind aus dem dilatanten Elastomer gefertigt. Die O-Ringe 72 und 73 entkoppeln somit das Druckstück 71 akustisch von dem das Druckstück 71 umgebenden Gehäuse. Durch die Verwendung des dilatanten Elastomers gelingt die akustische Entkopplung besonders wirksam.

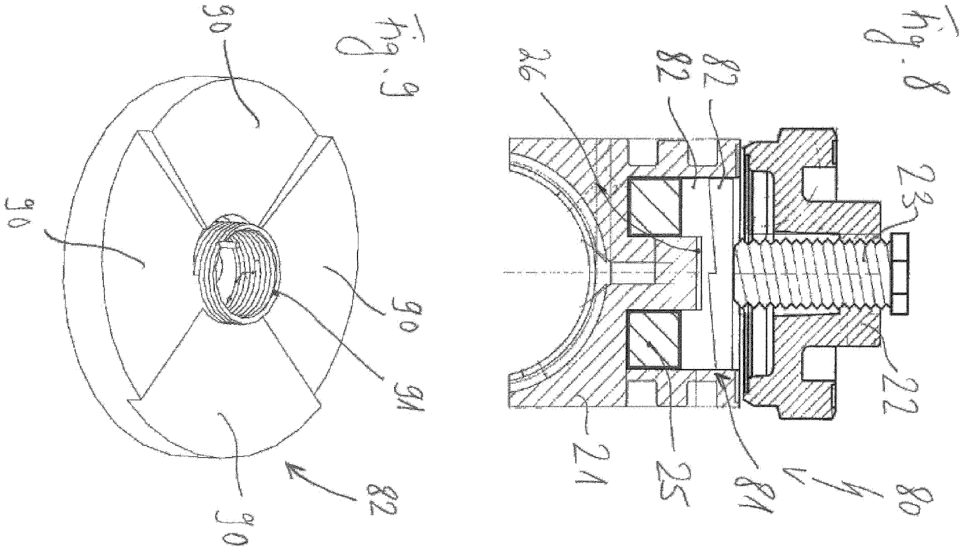

Eine Vorrichtung 80 zum Andrücken der Zahnstange an das Ritzel ist mit dem Druckstück 21 ausgerüstet (siehe Fig. 8). Gegen das Druckstück 21 drückt die Stellschraube 22. In die Stellschraube 22 ist der Schraubbolzen 23 eingeschraubt. Der Schraubbolzen 23 drückt gegen eine Nachstelleinrichtung 81, die zwei Scheiben 82 aufweist. Die Nachstelleinrichtung 81 drückt gegen das Federelement 25.

Die Nachstelleinrichtung 81 gleicht ein in der Lenkung im Laufe des Betriebes auftretendes, vorzugsweise verschleißbedingtes Spiel aus.

Die beiden Scheiben 82 (siehe Fign. 8 und 9) weisen jeweils vier schräge Flächensegmente 90 auf, an welchen die Scheiben 82 aneinander anliegen.

In der Mitte der Scheiben 82 befindet sich eine Bohrung zur Aufnahme einer Drehfeder 91. Die Drehfeder 91 verdreht die beiden Scheiben 82 in der Weise gegeneinander, so dass die Gesamtdicke der beiden Scheiben 82 zunimmt, sobald durch Verschleiß und/oder Setzen der Zahnstange, des Druckstücks 21 oder einer zwischen der Zahnstange und dem Druckstück 21 angeordneten hier nicht gezeigten Folie ein Spiel entsteht. Auf diese Weise wird also das Spiel ausgeglichen und das Druckstück 21 drückt möglichst spielfrei auf die Zahnstange.

Die vier schrägen Flächensegmente 90 weisen nur einen sehr geringen Schrägungswinkel auf. Dadurch wird verhindert, dass das axial auf die Scheiben 82 wirkende Federelement 25 die Scheiben 82 entgegen der von der Drehfeder 91 erzeugten Kraft verdreht, so dass die Nachstelleinrichtung 81 ihre Funktion sonst nicht erfüllen könnte.

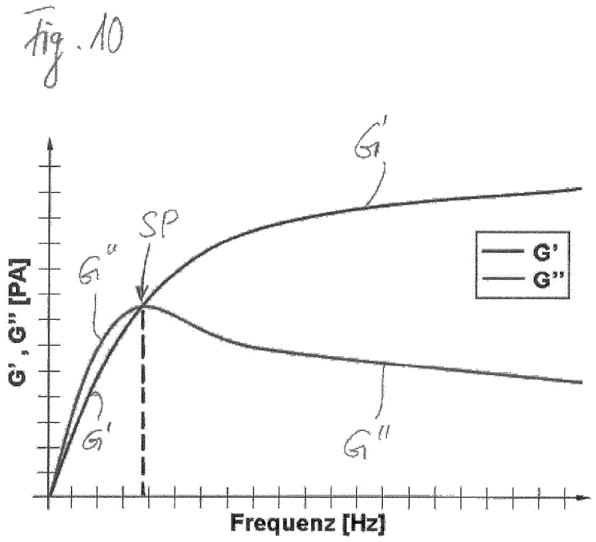

Fig. 10 zeigt eine Kennlinie G" eines Verlustmoduls und eine Kennlinie G' eines Speichermoduls eines dilatanten Elastomers, aufgetragen über einer Frequenz. Die beiden Kennlinien G" und G' schneiden sich in einem Schnittpunkt SP, der oberhalb einer bestimmten Grenzfrequenz liegt. Der linke Bereich der Kennlinie G" kommt bei langsamen Lenkbewegungen, also bei niedrigen Lenkwechselfrequenzen zum Tragen, wie sie insbesondere bei schnellen Fahrten, beispielsweise auf einer Autobahn, auftreten. Der rechte Bereich der Kennlinie G' kommt bei schnellen Lenkbewegungen, also bei hohen Lenkwechselfrequenzen zum Tragen, wie sie bei langsamen Fahrten oder im Stillstand, beispielsweise beim Einparken oder bei einer Fahrt über eine holprige Fahrbahn auftreten.

Der Schnittpunkt SP liegt vorteilhafterweise in einem Frequenzbereich von 2 Hz bis 15 Hz. Dieser Frequenzbereich hat sich in der Praxis als besonders wirksam erwiesen, um eine optimale Anpressung bei niedrigen und bei hohen Lenkwechselfrequenzen zu erzielen.

**Bezugszeichenliste**

| | | | |
|---|---|---|---|
| 10 | Lenkung | 53 | Federelement |
| 11 | Gehäusebereich | | |
| 12 | Gehäusebereich | 60 | Vorrichtung |
| 13 | Vorrichtung | 61 | Druckstück |
| | | 62 | Stellschraube |
| 20 | Vorrichtung | 63 | Deckel |
| 21 | Druckstück | 64 | Federelement |
| 22 | Stellschraube | 65 | Nut |
| 23 | Schraubbolzen | | |
| 24 | Deckel | 70 | Vorrichtung |
| 25 | Federelement | 71 | Druckstück |
| 26 | Hohlraum | 72 | O-Ring |
| 27 | Nut | 73 | O-Ring |
| | | 74 | Stellschraube |
| 30 | Vorrichtung | 75 | Federelement |
| 31 | Druckstück | 76 | Deckel |
| 32 | Stellschraube | 77 | Federelement |
| 33 | Absatz | | |
| 34 | Deckel | 80 | Vorrichtung |
| 35 | Federelement | 81 | Nachstelleinrichtung |
| 36 | Hohlraum | 82 | Scheibe |
| 37 | Nut | | |
| | | 90 | Flächensegment |
| 40 | Vorrichtung | 91 | Drehfeder |
| 41 | Federelement | | |
| 42 | Bauelement | G' | Kennlinie Speichermodul |
| | | G" | Kennlinie Verlustmodul |
| 50 | Vorrichtung | SP | Schnittpunkt |
| 51 | Druckstück | | |
| 52 | Deckel | | |

## Patentansprüche

1. Vorrichtung (13, 20, 30, 40, 50, 60, 70, 80) zum Andrücken eines ersten Übertragungselements an ein in das erste Übertragungselement eingreifendes zweites Übertragungselement, für eine Zahnstangenlenkung eines Kraftfahrzeugs, mit einem Gehäuse, einem Druckstück (21, 31, 51, 61, 71) und mindestens einem Federelement (25, 35, 41, 53, 64, 72, 73, 75), wobei das Druckstück (21, 31, 51, 61, 71) in Richtung des ersten Übertragungselements durch das Federelement (25, 35, 41, 53, 64, 72, 73, 75) belastbar und in dem Gehäuse verschiebbar geführt ist, **dadurch gekennzeichnet, dass** das Federelement (25, 35, 41, 53, 64, 72, 73, 75) aus mindestens einem dilatanten Elastomer mit einem einen Verlustmodul und einen Speichermodul aufweisenden Elastizitätsmodul gefertigt ist, wobei sich die Kennlinien (G", G') des Verlustmoduls und des Speichermoduls in einem Schnittpunkt (SP) schneiden, sodass bei einer niedrigen Lenkwechselfrequenz der zum Schnittpunkt (SP) links liegende Teil einer Kennlinie (G") des Verlustmoduls und bei einer hohen Lenkwechselfrequenz der zum Schnittpunkt (SP) rechts liegende Teil einer Kennlinie (G') des Speichermoduls zum Tragen kommt.

2. Vorrichtung (13, 20, 30, 40, 50, 60, 70, 80) nach Anspruch 1, **dadurch gekennzeichnet, dass** das mindestens eine dilatante Elastomer die Form eines Kegels, eines Kegelstumpfes, einer Scheibe, eines Rings oder eines O-Rings aufweist.

3. Vorrichtung (13, 20, 30, 40, 50, 60, 70, 80) nach Anspruch 1 oder 2, **dadurch gekennzeichnet, dass** das mindestens eine Federelement (25, 35, 41, 53, 64, 75) in einem Hohlraum (26, 36) im Druckstück (21, 31, 51, 61, 71) angeordnet ist.

4. Vorrichtung (13, 20, 30, 40, 50, 60, 70) nach Anspruch 3, **dadurch gekennzeichnet, dass** der Hohlraum (26, 36) mit einem Deckel (24, 34, 52, 63, 74) verschließbar ist.

5. Vorrichtung (80) nach Anspruch 3, **dadurch gekennzeichnet, dass** in dem Hohlraum (26) eine Nachstelleinrichtung (81) angeordnet ist.

6. Vorrichtung (13, 20, 30, 40, 50, 60, 70, 80) nach einem der Ansprüche 1 bis 5, **dadurch gekennzeichnet, dass** der Deckel (24, 34, 52, 63, 74) und/oder die Nachstelleinrichtung (81) gegen das mindestens eine Federelement (25, 35, 41, 53, 64, 75) drückt.

7. Vorrichtung (13, 20, 30, 40, 50, 60, 70, 80) nach einem der Ansprüche 4 bis 6, **dadurch gekennzeichnet, dass** eine Stellschraube (22, 32, 62, 74) gegen den Deckel (24, 34, 52, 63, 74) und/oder die Nachstelleinrichtung (81) drückt.

8. Vorrichtung (20, 80) nach Anspruch 7, **dadurch gekennzeichnet, dass** in der Stellschraube (22) ein Schraubbolzen (23) zur Feineinstellung einer Vorspannung des Federelements (25) vorgesehen ist.

9. Vorrichtung (13, 20, 30, 40, 50, 60, 70, 80) nach einem der Ansprüche 1 bis 8, **dadurch gekennzeichnet, dass** das mindestens eine Elastomer mit einer Umhüllung versehen ist.

10. Vorrichtung (13, 20, 30, 40, 50, 60, 70, 80) nach einem der Ansprüche 1 bis 9, **dadurch gekennzeichnet, dass** sich die Kennlinie (G") des Verlustmoduls und die Kennlinie (G') des Speichermoduls des mindestens einen dilatanten Elastomers, aufgetragen über einer Frequenz, in einem Frequenzbereich von 2 Hz bis 15 Hz schneiden.

11. Vorrichtung (70) nach einem der Ansprüche 1 bis 10, **dadurch gekennzeichnet, dass** das als O-Ring (72, 73) ausgebildete mindestens eine Elastomer in mindestens einer um das Druckstück (71) umlaufenden Nut angeordnet ist.

12. Vorrichtung (13, 20, 30, 40, 50, 60, 70, 80) nach einem der Ansprüche 1 bis 10, **dadurch gekennzeichnet, dass** das mindestens eine dilatante Elastomer mit einem Füllstoff versehen ist.

## Claims

1. Device (13, 20, 30, 40, 50, 60, 70, 80) for pressing a first transmission element against a second transmission element which engages in the first transmission element, for a rack-and-pinion steering system of a motor vehicle, having a housing, a pressure element (21, 31, 51, 61, 71) and at least one spring element (25, 35, 41, 53, 64, 72, 73, 75), wherein the pressure element (21, 31, 51, 61, 71) can be loaded in the direction of the first transmission element by the spring element (25, 35, 41, 53, 64, 72, 73, 75) and is guided in a displaceable fashion in the housing, **characterized in that** the spring element (25, 35, 41, 53, 64, 72, 73, 75) is fabricated from at least one dilatant elastic with a modulus of elasticity having a loss modulus and a storage modulus, wherein the characteristic curves (G", G') of the loss modulus and of the storage modulus intersect at an intersection point (SP), with the result that in the case of a low steering changeover frequency the part of a characteristic curve (G") of the loss modulus which is to the left of the intersection point (SP) comes into play, and in the case of a high steering changeover frequency the part of a characteristic curve (G') of the storage modulus which is to the right of the intersection point (SP) comes into play.

2. Device (13, 20, 30, 40, 50, 60, 70, 80) according to Claim 1, **characterized in that** the at least one dilatant elastomer is in the form of a cone, a truncated cone, a disc, a ring or an O ring.

3. Device (13, 20, 30, 40, 50, 60, 70, 80) according to Claim 1 or 2, **characterized in that** the at least one spring element (25, 35, 41, 53, 64, 75) is arranged in a cavity (26, 36) in the pressure element (21, 31, 51, 61, 71).

4. Device (13, 20, 30, 40, 50, 60, 70, 80) according to Claim 3, **characterized in that** the cavity (26, 36) can be closed off with a cover (24, 34, 52, 63, 74) .

5. Device (80) according to Claim 3, **characterized in that** an adjustment device (81) is arranged in the cavity (26).

6. Device (13, 20, 30, 40, 50, 60, 70, 80) according to one of Claims 1 to 5, **characterized in that** the cover (24, 34, 52, 63, 74) and/or the adjustment device (81) press/presses against the at least one spring element (25, 35, 41, 53, 64, 75).

7. Device (13, 20, 30, 40, 50, 60, 70, 80) according to one of Claims 4 to 6, **characterized in that** an adjustment screw (22, 32, 62, 74) presses against the cover (24, 34, 52, 63, 74) and/or the adjustment device (81).

8. Device (20, 80) according to Claim 7, **characterized in that** a screw bolt (23) for fine adjustment of prestress of the spring element (25) is provided in the adjustment screw (22).

9. Device (13, 20, 30, 40, 50, 60, 70, 80) according to one of Claims 1 to 8, **characterized in that** the at least one elastomer is provided with a sheath.

10. Device (13, 20, 30, 40, 50, 60, 70, 80) according to one of Claims 1 to 9, **characterized in that** the characteristic curve (G") of the loss modulus and the characteristic curve (G') of the storage modulus of the least one dilatant elastomer intersect, when plotted against a frequency, in a frequency range of 2 Hz to 15 Hz.

11. Device (70) according to one of Claims 1 to 10, **characterized in that** the at least one elastomer which is embodied as an O ring (72, 73) is arranged in at least one groove which surrounds the pressure element (71).

12. Device (13, 20, 30, 40, 50, 60, 70, 80) according to one of Claims 1 to 10, **characterized in that** the at least one dilatant elastomer is provided with a filler material.

## Revendications

1. Dispositif (13, 20, 30, 40, 50, 60, 70, 80) destiné à comprimer un premier élément de transmission contre un deuxième élément de transmission s'engageant dans le premier élément de transmission, destiné à la direction à crémaillère d'un véhicule automobile, comportant un boîtier, une pièce de pression (21, 31, 51, 61, 71) et au moins un élément élastique (25, 35, 41, 53, 64, 72, 73, 75), dans lequel la pièce de pression (21, 31, 51, 61, 71) peut être contrainte dans la direction du premier élément de transmission par l'élément élastique (25, 35, 41, 53, 64, 72, 73, 75) et est guidée de manière coulissante dans le boîtier, **caractérisé en ce que** l'élément élastique (25, 35, 41, 53, 64, 72, 73, 75) est fabriqué à partir d'au moins un élastomère expansible ayant un module d'élasticité présentant un module de perte et un module d'accumulation, dans lequel les courbes caractéristiques (G", G') du module de perte et du module d'accumulation se coupent en un point d'intersection (SP) de manière à ce que la partie d'une courbe caractéristique (G'') du module de perte se situant à gauche du point d'intersection (SP) soit en vigueur aux faibles fréquences du changement de direction et à ce que la partie d'une courbe caractéristique (G') du module d'accumulation se situant à droite du point d'intersection (SP) soit en vigueur aux fréquences élevées du changement de direction.

2. Dispositif (13, 20, 30, 40, 50, 60, 70, 80) selon la revendication 1, **caractérisé en ce que** l'au moins un élastomère expansible présente la forme d'un cône, d'un cône tronqué, d'un disque, d'une bague ou d'un joint torique.

3. Dispositif (13, 20, 30, 40, 50, 60, 70, 80) selon la revendication 1 ou 2, **caractérisé en ce que** l'au moins un élément élastique (25, 35, 41, 53, 64, 75) est disposé à l'intérieur d'une cavité (26, 36) dans la pièce de pression (21, 31, 51, 61, 71).

4. Dispositif (13, 20, 30, 40, 50, 60, 70) selon la revendication 3, **caractérisé en ce que** la cavité (26, 36) peut être fermée par un capot (24, 34, 52, 63, 74).

5. Dispositif (80) selon la revendication 3, **caractérisé en ce qu'**un dispositif de réajustement (81) est disposé dans la cavité (26).

6. Dispositif (13, 20, 30, 40, 50, 60, 70, 80) selon l'une quelconque des revendications 1 à 5, **caractérisé en ce que** le capot (24, 34, 52, 63, 74) et/ou le dispositif le réajustement (81) exerce une pression contre l'au moins un élément élastique (25, 35, 41, 53, 64, 75).

7. Dispositif (13, 20, 30, 40, 50, 60, 70, 80) selon l'une quelconque des revendications 4 à 6, **caractérisé en ce qu'**une vis de réglage (22, 32, 62, 74) exerce une pression contre le capot (24, 34, 52, 63, 74) et/ou contre le dispositif le réajustement (81).

8. Dispositif (20, 80) selon la revendication 7, **caractérisé en ce qu'**il est prévu un boulon (23) dans la vis de réglage (22) peur le réglage fin d'une précontrainte de l'élément élastique (25).

9. Dispositif (13, 20, 30, 40, 50, 60, 70, 80) selon l'une quelconque des revendications 1 à 8, **caractérisé en ce que** l'au moins un élastomère est muni d'une enveloppe.

10. Dispositif (13, 20, 30, 40, 50, 60, 70, 80) selon l'une quelconque des revendications 1 à 9, **caractérisé en ce que** la courbe caractéristique (G'') du module de perte et la courbe caractéristique (G') du module d'accumulation de l'au moins un élastomère expansible, par rapport à la fréquence, se coupent dans une zone de fréquence de 2 Hz à 15 Hz.

11. Dispositif (70) selon l'une quelconque des revendications 1 à 10, **caractérisé en ce que** l'au moins un élastomère réalisé sous forme de joint torique (72, 73) est disposé dans au moins une rainure circonférentielle sur le pourtour de la pièce de pression (71) .

12. Dispositif (13, 20, 30, 40, 50, 60, 70, 80) selon l'une quelconque des revendications 1 à 10, **caractérisé en ce que** l'au moins un élastomère expansible est muni d'un matériau de remplissage.
